# EUROPÄISCHE PATENTANMELDUNG

(11) **EP 1 754 688 A1**
(43) Veröffentlichungstag der Anmeldung: **21.02.2007**
(21) Anmeldenummer: 06016890.3
(22) Anmeldetag: 12.08.2006
(51) Int. Cl.: C03B 23/11, C03B 23/09, C03B 23/045

(54) **Verfahren und Maschine zur Herstellung von Spritzenkörpern**

(30) Priorität: 17.08.2005 DE 102005038764
(71) Anmelder: AMBEG Dr. J. Dichter GmbH, 10829 Berlin (DE)
(72) Erfinder: Langer, Matthias, 12355 Berlin (DE)
(74) Vertreter: Grünecker, Kinkeldey, Stockmair & Schwanhäusser Anwaltssozietät

(57) **Zusammenfassung**

Zur Herstellung von Spritzenkörpern 1 mit einem Fingerflansch 3 werden ein Verfahren und eine Maschine vorgeschlagen, bei dem bzw. der die Spitze des Spritzenkörpers 1 in bekannter Weise auf einem Drehtisch 5 mit um vertikale Achsen rotierenden Haltefuttern 8 geformt wird, bei dem bzw. der die Fertigung des Fingerflansches 3 hingegen auf einem Drehtisch 12 mit Haltefuttern 13 erfolgt, die sich um horizontale Achsen drehen können.

## Beschreibung

Die Erfindung betrifft ein Verfahren zur Herstellung von an ihrem einen Ende eine Spitze und an ihrem anderen Ende einen Fingerflansch aufweisenden Spritzenkörpern auf einer Glasbearbeitungsmaschine mit zwei jeweils eine Vielzahl von Haltefuttern und Arbeitsstationen aufweisenden Teilsystemen, von denen das erste zur Herstellung des die Spitze aufweisenden Teils des Spritzenkörpers und das zweite zur Herstellung des den Fingerflansch aufweisenden Teils des Spritzenkörpers dient, wobei die Formgebung des die Spitze aufweisenden Teils des Spritzenkörpers im ersten Teilsystem der Glasbearbeitungsmaschine mit Hilfe eines schrittgeschalteten, eine vertikale Achse aufweisenden Drehtisches mit um vertikale Achsen drehbaren Haltefuttern erfolgt, die die Arbeitsstationen passieren.

Ein Verfahren der vorstehenden Art ist aus der DE 199 55 791 A1 bekannt. Zur Durchführung des bekannten Verfahrens dient eine Maschine mit zwei Teilsystemen, in denen vertikal angeordnete Haltefutter die Werkstücke schrittweise auf einer vorgegebenen Umlaufbahn an den Arbeitsstationen vorbeiführen. Dabei werden im ersten Teilsystem der Maschine Glasrohre mit Hilfe eines Rohrzuführers in die Haltefutter eingeführt und dort, im Zuge eines Umlaufs, am unterem Ende bearbeitet. Diese Art der Beschickung der Maschine mit Glasrohren und deren Bearbeitung in sich um vertikale Achsen drehenden Haltefuttern bietet gegenüber ebenfalls bekannten Anordnungen, bei denen der gesamte Herstellungsprozess unter Verwendung von sich um horizontale Achsen drehenden Haltefuttern erfolgt, erhebliche wirtschaftliche Vorteile. Der letzte Arbeitsschritt im ersten Teilsystem besteht aus dem Abtrennen des halbfertigen Spritzenkörpers vom Glasrohr und der Übergabe in das zweite Teilsystem. Hier wird die zweite Seite des Werkstücks bearbeitet, anschließend wird das fertige Produkt entnommen.

Bei der Bearbeitung des an der Unterseite offenen Endes der Glasröhren im ersten Teilsystem der Maschine wird unter abwechselnder Einwirkung von durch Gasbrenner erzeugter Wärme und mechanisch oder servomotorisch angetriebener Formeinrichtungen ein Spritzenkonus angeformt. Anschließend wird das Glasrohr durch eine entsprechende Mechanik im ersten Teil der Maschine im Haltefutter abgesenkt, um für den nach der Abtrennung des halbfertigen Spritzenkörpers folgenden Umlauf des Glasrohres im ersten Teilsystem der Maschine wieder die gleiche Bearbeitungshöhe zu erhalten. Bei der regelmäßig zur Anwendung kommenden Thermoschocktrennung wird das vorher an der Trennstelle mechanisch durch einen Diamanten oder einer Ritzscheibe angeritzte Glasrohr an der Ritzstelle kurzzeitig erwärmt und anschließend schlagartig abgekühlt, z. B. mit Hilfe eines feinen vernebelten Wasserstrahls. Durch die hierdurch in das Glasrohr induzierten hohen inneren Spannungen kommt es an der angeritzten Stelle zu Spannungsrissen, welche ein plötzliches Absprengen des halbfertigen Spritzenkörpers vom Glasrohr zur Folge haben.

Der halbfertige Spritzenkörper fällt bei den nach dem bekannten Verfahren arbeitenden Glasbearbeitungsmaschinen nach der Trennung direkt in das darunter stehende vertikale Haltefutter des zweiten Teilsystems der Maschine. Hier wird der oben offene, halbfertige Spritzenkörper wiederum unter abwechselnder Einwirkung von Wärme und Formeinrichtungen an der oben offenen Seite bearbeitet, anschließend wird das fertige Produkt entnommen.

Das bekannte Verfahren zur Herstellung von Spritzenkörpern unter Verwendung der beschriebenen Glasbearbeitungsmaschine vermag aufgrund der vertikalen Bearbeitungslage des halbfertigen Spritzenkörpers im zweiten Teilsystem der Maschine nicht voll zu befriedigen, denn es besteht die aus der vertikalen Bearbeitungslage der am oberen Ende offenen Werkstücke resultierende Gefahr einer Verunreinigung im Werkstückinneren durch Hereinfallen von Schmutz, Öl und der bei der Endfertigung der Fingerflansche abgetrennten Glasabschnitte. Besonders groß ist die Gefahr der Verunreinigung bei der Herstellung von Spritzenkörpern deshalb, weil bei der Formung eines Fingerflansches im zweiten Teilsystem ein vorher beölter Dorn in das erwärmte Werkstück eingetaucht wird, um das obere Ende nach außen umzulegen, so dass eine Art Teller entsteht. Hierbei kann es passieren, dass das zum Zwecke der Formung auf den Dorn aufgetragene Formöl in den Spritzenkörper tropft und ihn somit besonders stark verunreinigt. In einer weiteren Arbeitsstation im zweiten Teilsystem der Maschine wird der vorher angeformte tellerförmige Fingerflansch beidseitig mit einer Art Schervorrichtung abgeschnitten. Die hierbei entstehenden Abfallstücke aus Glas aber auch Splitter und Schmutzpartikel können, wie bereits erwähnt, ebenfalls in den nach oben offenen Spritzenkörper fallen und ihn verunreinigen. Ein weiterer Nachteil der vertikalen Anordnung der Haltefutter im zweiten Teilsystem der Maschine besteht darin, dass es bei einer Erwärmung der Maschine und einer damit verbundenen Ausdehnung des Halteringes der Haltefutter zu einer horizontalen Verschiebung der Haltefutter nach außen kommt und somit die Positionierung der Werkstücke in den entsprechenden Formstationen an Exaktheit zu wünschen übrig lässt.

Zur weitgehenden Eliminierung der vorstehend beschriebenen Verunreinigungsgefahren wurde ein Verfahren entwickelt, das dadurch gekennzeichnet ist, dass die Formgebung des den Fingerflansch aufweisenden Teils des Spritzenkörpers nach Schwenkung seiner Längsachse um 90° im zweiten Teilsystem der Glasbearbeitungsmaschine auf einem eine vertikale Achse aufweisenden Drehtisch durchgeführt wird, dessen Haltefutter um horizontale Achsen drehbar sind. Bei dem erfindungsgemäßen Verfahren wird die erste Seite des Spritzenkörpers also weiterhin in vertikaler Bearbeitungslage geformt, während die zweite Seite abweichend von der herkömmlichen Technik in horizontaler Bearbeitungslage geformt wird. Hierdurch ist es möglich, die Vorteile des ersten vertikalen Bearbeitungsteils der Maschine, wie das Herstellen der Spritzenkörper direkt vom Glasrohr, mit den Vorteilen einer horizontalen Bearbeitungslage im zweiten Teil der Maschine zu kombinieren. Die horizontale Bearbeitungslage der Werkstücke im zweiten Teilsystem der Maschine bietet den Vorteil, dass eine Verschmutzung des Glaskörperinneren durch die Verwendung von geölten Formwerkzeugen bzw. durch hereinfallende Glas- und Schmutzpartikel vermieden wird und die radiale Ausdehnung des Drehtisches auf die axiale Position der Spritzenkörper in den Formstationen ohne Einfluss bleibt.

Gegenstand der Anmeldung ist außerdem eine Maschine zur Durchführung des erfindungsgemäßen Verfahrens, die dadurch gekennzeichnet ist, dass sie mindestens zwei durch eine Transfereinheit miteinander verknüpfte Drehtische aufweist, von denen der eine mit um eine vertikale Achse rotierenden Haltefuttern und der andere mit um horizontale Achsen rotierenden Haltefuttern ausgestattet ist.

Weitere Merkmale und Einzelheiten des Verfahrens und der zu seiner Durchführung genutzten Maschine ergeben sich aus den Unteransprüchen und der nachstehenden Beschreibung der beigefügten Zeichnungen. Es zeigen:
- Fig. 1: einen zu fertigenden Spritzenkörper mit einem Fingerflansch,
- Fig. 2: die Draufsicht auf eine nach dem erfindungsgemäßen Verfahren arbeitende Glasbearbeitungsmaschine,
- Fig. 3: eine Seitenansicht der in Fig. 2 gezeigten Glasbearbeitungsmaschine,
- Fig. 4: eine erste Bearbeitungsstation im ersten Teilsystem der Maschine (Erwärmung),
- Fig. 5: eine zweite Bearbeitungsstation im ersten Teilsystem der Maschine (Formung),
- Fig. 6: eine dritte Bearbeitungsstation im ersten Teilsystem der Maschine (Einstellung der Spritzenlänge),
- Fig. 7: eine Seitenansicht der Übergabestation vom ersten in das zweite Teilsystem einer nach dem erfindungsgemäßen Verfahren arbeitenden Glasbearbeitungsmaschine,
- Fig. 8: einen Schnitt durch ein horizontales Haltefutter des zweiten Teilsystems einer erfindungsgemäß arbeitenden Glasbearbeitungsmaschine,
- Fig. 9: die Draufsicht auf ein horizontales Haltefutter des zweiten Teilsystems einer erfindungsgemäß arbeitenden Glasbearbeitungsmaschine.

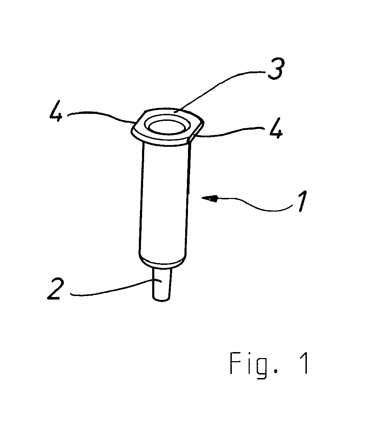

In der Figur 1 ist ein zu fertigender Spritzenkörper 1 einer Glasspritze gezeigt, dessen konische Spitze 2 im ersten Teilsystem einer Glasbearbeitungsmaschine und dessen Fingerflansch 3 im zweiten Teilsystem einer Glasbearbeitungsmaschine geformt wird. Die Flächen 4 entstehen ebenfalls im zweiten Teilsystem durch beidseitiges Abschneiden von Teilen des vorher tellerförmigen Fingerflansches 3.

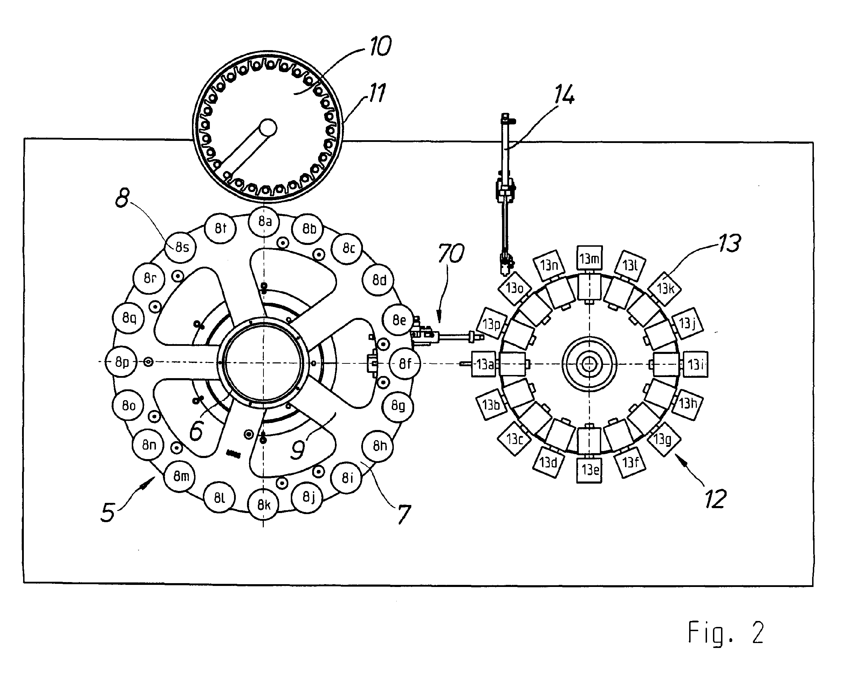

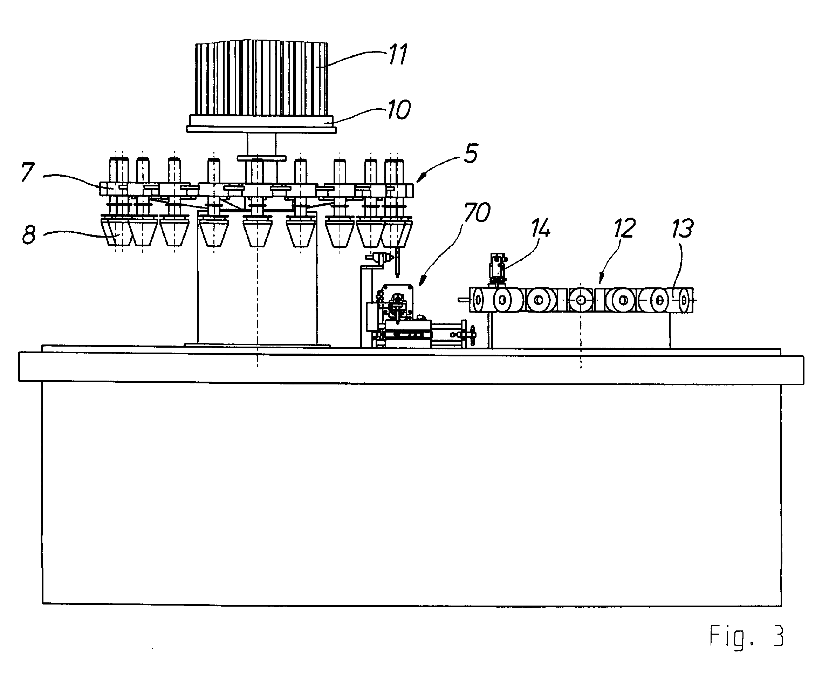

Figur 2 und 3 zeigen die Draufsicht bzw. die Seitenansicht einer zur Durchführung des Verfahrens dienenden Glasbearbeitungsmaschine mit einem Drehtisch 5, der einen mit einer Hohlwelle 6 verbundenen Haltering 7 für eine Vielzahl von vertikal angeordneten, rotierenden Haltefuttern 8 aufweist. Der Haltering 7 ist über radiale Streben 9 mit der Hohlwelle 6 verbunden, durch die eine schrittweise Drehbewegung in den Haltering 7 einleitbar ist. Im Zuge der getakteten Drehbewegungen des Halteringes 7 werden die mittels eines Rohrzuführers 10 mit Glasrohren 11 bestückten, vertikalen Haltefutter 8 diversen Arbeitsstationen zugeführt. Der kleinere, rechte Teil der Maschine ist ebenfalls mit einem Drehtisch ausgestattet, der in diesem Falle eine kleinere Anzahl von vertikal angeordneten Haltefuttern 13 aufweist, die im Bereich der Schnittstelle 8f/13a vom Glasrohr abgetrennte Teile übernehmen, um u. a. die Fingerflansche 3 der Spritzenkörper 1 zu formen. Nach dem Durchlaufen der Stationen des zweiten Drehtisches werden die fertigen Werkstücke mit Hilfe eines Entnahmegreifers 14 entnommen.

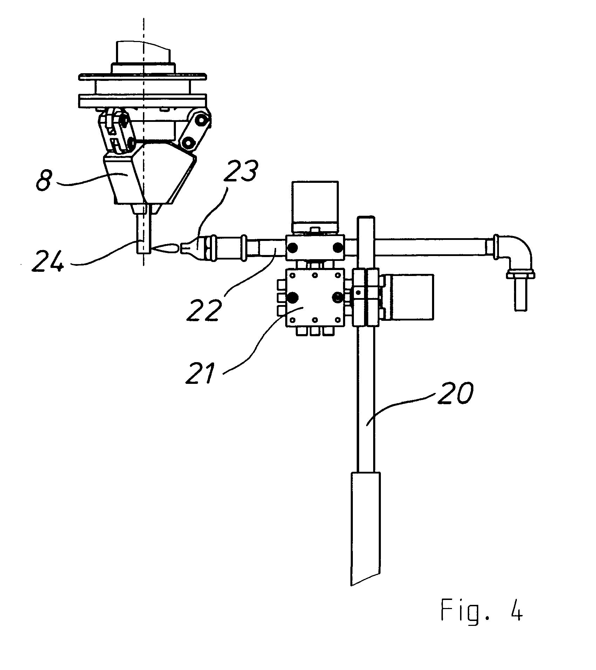

Figur 4 zeigt beispielhaft eine im ersten Teilsystem der Maschine angeordnete Station zum Erwärmen des Glasrohres. Das auf der Maschinentischplatte befestigte Stativ 20 hält die in zwei Richtungen zu verstellende Kreuzschlitteneinheit 21, an welcher ein Brennerrohr 22 mit einem Brenner 23 befestigt ist. Der Brenner 23 erwärmt das im rotierendem Haltefutter 8 gehaltene Glasrohr 24 an einer Bearbeitungsstelle.

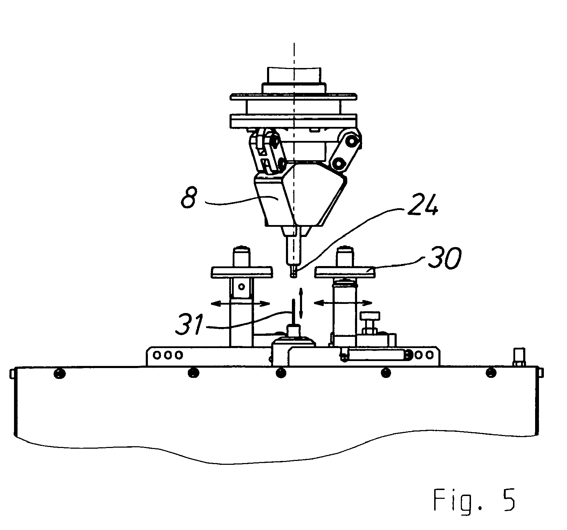

In Figur 5 ist eine Formstation der Glasbearbeitungsmaschine zur Formung der Spitze eines Spritzenkörpers 1 dargestellt. Hierbei formen horizontal verschiebbare, rotativ gelagerte Formrollen 30 das vorher erwärmte Glasrohr 24, welches vom rotierenden Haltefutter 8 gehalten wird. Gleichzeitig taucht ein vertikal verschiebbarer Dorn 31 von unten in das Glasrohr ein, um den definierten Durchgang der Spitze des Spritzenkörpers 1 zu formen.

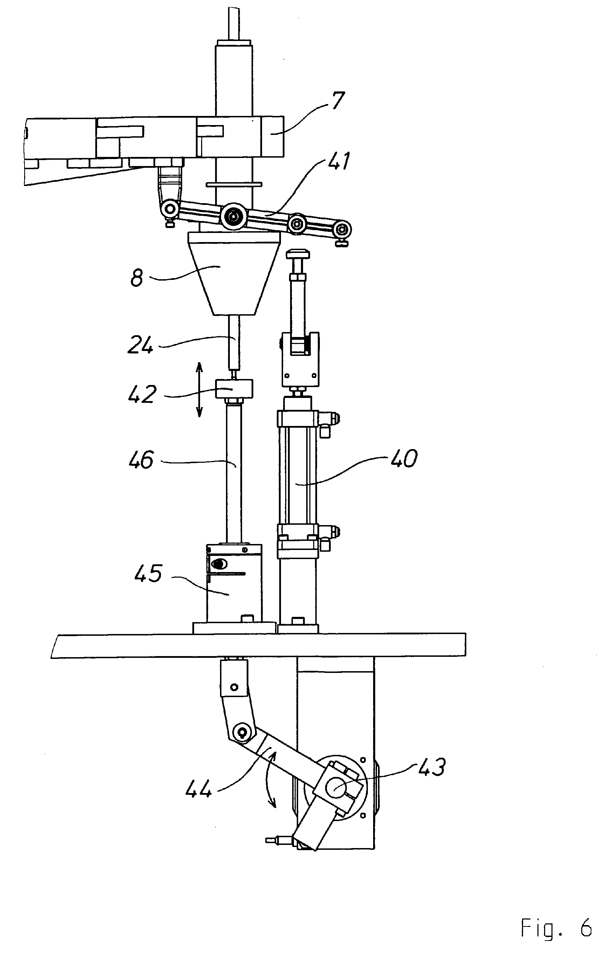

Nach der endgültigen Formgebung im Konusbereich des Spritzenkörpers 1 wird in einer weiteren Arbeitsstation die Länge des abzutrennenden Spritzenkörpers eingestellt, siehe Figur 6. Der durch den Futteröffner 40 betätigte Hebel 41 öffnet das Haltefutter 8, wodurch das Glasrohr 24 auf den direkt darunter stehenden Auffallteller 42 fällt. Dieser senkt sich mit Hilfe der durch einen Getriebemotor 43 und einen Hebel 44 angetriebenen, linear im Lager 45 gelagerten Welle 46 um einen einstellbaren Wert nach unten ab, anschließend wird das Haltefutter wieder geschlossen. Durch ein weiteres kurzes Absenken der Auffallplatte 42 wird der schon fertig geformte konische Bereich des Spritzenkörpers wieder freigegeben, die abzutrennende Länge ist nun eingestellt.

Die Bearbeitung des zweiten Endes des Spritzenkörpers findet anschließend im zweiten Teilsystem der Maschine statt, hier durchläuft das Werkstück wiederum verschiedene Wärm- bzw. Formstationen, wobei die das Werkstück aufnehmenden Haltefutter 13 in einigen Stationen rotieren, in anderen jedoch stillstehen.

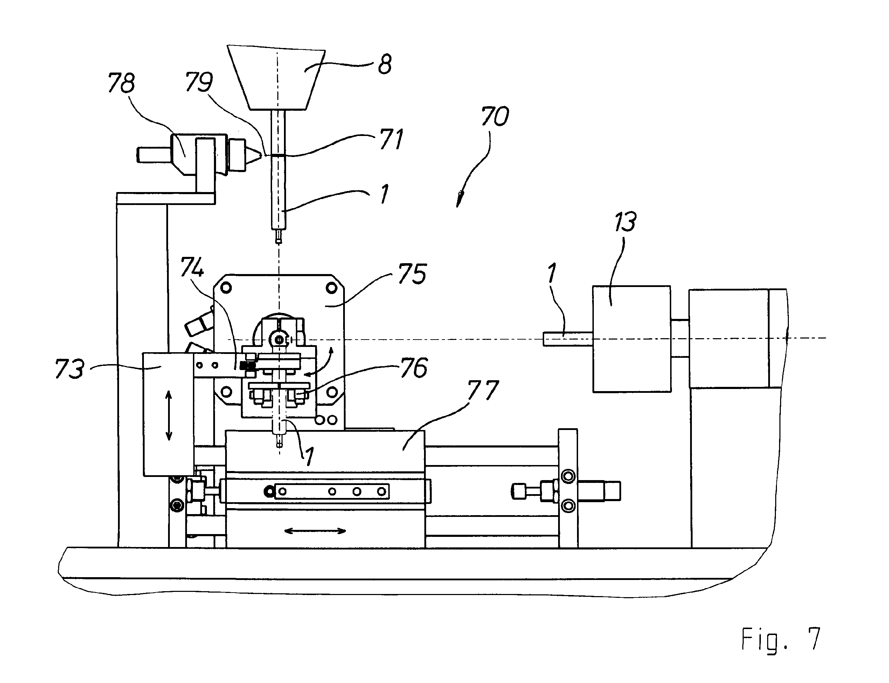

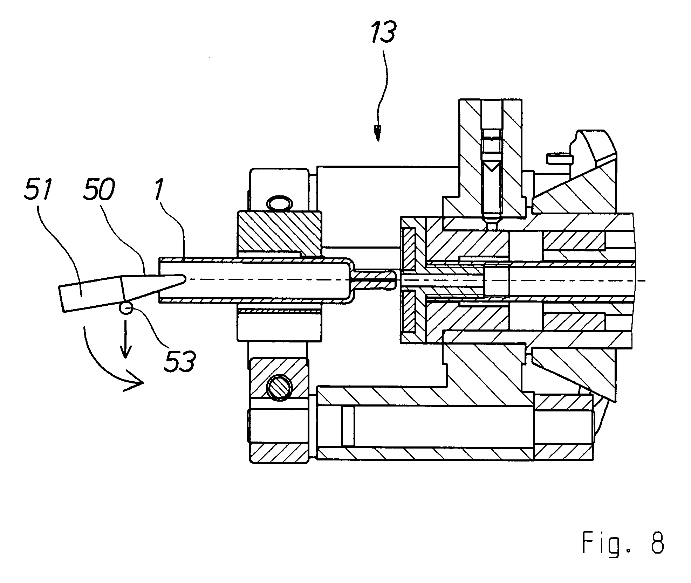

Um den Fingerflansch 3 des Spritzenkörpers 1 zu formen, bedient man sich, wie in Figur 8 zu sehen ist, eines mit Formöl an der Fläche 50 benetzten Dornes 51, welcher nach dem Eintauchen in den halbfertigen Spritzenkörper 1 eine Schwenkbewegung beschreibt und dabei den oberen, vorher erwärmten, viskosen Glaskörperbereich seitlich umlegt. Um zu verhindern, dass sich wie bei vertikaler Arbeitsweise durch ungenaue Dosierung des Formöles vor dem Umlegen ein Öltropfen 53 am unteren Ende des Dornes 51 ausbildet, welcher in den halbfertigen Spritzenkörper 1 fällt und ihn verunreinigt, sind in der nach dem neuen Verfahren arbeitenden Glasbearbeitungsmaschine die Haltefutter 13 des zweiten Drehtisches 12 horizontal angeordnet, siehe Figur 7 bis 9. Dadurch kann es bei einem vorherigen Beölen des Dornes 51 an den Flächen 50 nicht mehr zu einem Eintropfen des Öltropfens 53 in den halbfertigen Spritzenkörper 1 und somit zu einer hieraus resultierenden Verunreinigung kommen. Vielmehr wird das Formöl, unterstützt durch eine leichte Schiefstellung des Dornes beim Eintauchen, vom offenen Spritzenkörper 1 wegfließen.

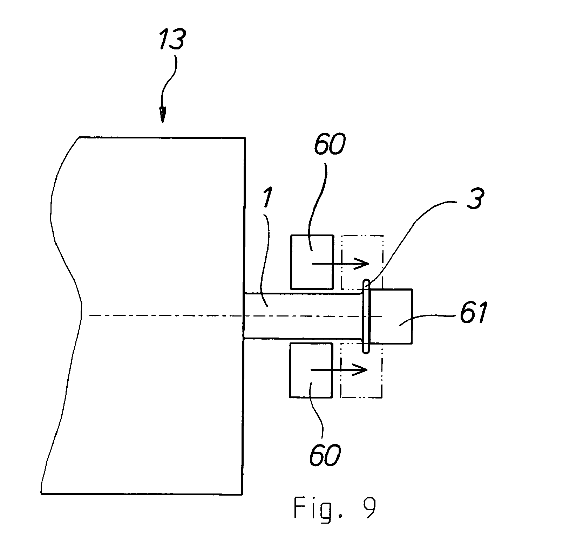

In der Arbeitsstation gemäß Figur 9 wird der in Figur 1 gezeigte Fingerflansch 3 beidseitig abgeschnitten, so dass die Flächen 4 entstehen. Hierfür bewegen sich zwei Schneidklötze 60 schlagartig an einem ein Widerlager bildenden Stempel 61 vorbei, so dass der zwischen den Schneiden der Schneidklötze 60 liegende Fingerflansch 3 beidseitig abgeschnitten wird. Auch hierbei kann es durch die abgeschnittenen Glasreste bei einer vertikalen Anordnung der Futter leichter zu einer Verunreinigung der Spritzenkörper kommen als bei der erfindungsgemäßen horizontalen Anordnung.

Aufgrund der horizontalen Futteranordnung im zweiten Teilsystem der Maschine ist an der Schnittstelle vom ersten zum zweiten Drehtisch eine Transfereinheit 70 notwendig, da ein einfaches Fallenlassen der abgetrennten halbfertigen Spritzenkörper nicht möglich ist. In Figur 7 ist eine Ausführung dieser Transfereinheit 70 dargestellt. Der an der Trennstelle 71 durch den von einer Wasserdüse 78 erzeugten feinen Wasserstrahl 79 abgesprengte, halbfertige Spritzenkörper 1 wird von einem an einem Vertikalschlitten 73 befestigten Greifer 74 gegriffen und nach unten transportiert. Hier übernimmt ein an einem schwenkbaren Träger 75 befestigter weiterer Greifer 76 den Spritzenkörper 1 und dreht ihn um 90 ° in die horizontale Lage. Anschließend wird der Spritzenkörper 1 mit Hilfe eines Linearschlittens 77 in ein Haltefutter 13 des zweiten Drehtisches 12 der Maschine transportiert.

Wie eingangs bereits angedeutet, führt der laufende Betrieb der Glasbearbeitungsmaschine auf Grund der notwendigen Erwärmung der Werkstücke auch zu einer starken Erwärmung der Haltefutter und des Drehtisches. Auf Grund der geometrischen Gegebenheiten des Drehtisches kommt es dabei zu einer Verschiebung der Haltefutter nach außen. Während diese Verschiebung bei vertikal orientierten Haltefuttern zu nicht maßhaltig geformten Fingerflanschen führen kann, ist dies bei Anwendung horizontal orientierter Haltefutter ausgeschlossen.

Das neue Verfahren zur Herstellung von Spritzenkörpern vereint somit im ersten Teil der Maschine den Vorteil einer kostengünstigen Fertigung von Spritzenkörpern direkt vom Glasrohr mit den zuvor erläuterten Vorteilen von horizontalen Haltefuttern im zweiten Teil der Maschine.

## Patentansprüche

1. Verfahren zur Herstellung von an ihrem einen Ende eine Spitze und an ihrem anderen Ende einen Fingerflansch aufweisenden Spritzenkörpern auf einer Glasbearbeitungsmaschine mit zwei jeweils eine Vielzahl von Halteflanschen und Arbeitsstationen aufweisenden Teilsystemen, von denen das erste zur Herstellung des die Spitze aufweisenden Teils des Spritzenkörpers und das zweite zur Herstellung des den Fingerflansch aufweisenden Teils des Spritzenkörpers dient, wobei die Formgebung des die Spitze aufweisenden Teils des Spritzenkörpers im ersten Teilsystem der Glasbearbeitungsmaschine mit Hilfe eines schrittgeschalteten, eine vertikale Achse aufweisenden Drehtisches mit um vertikale Achsen drehbaren Haltefuttern erfolgt, die die Arbeitsstationen passieren, **dadurch gekennzeichnet, dass** die Formgebung des den Fingerflansch (3) aufweisenden Teils des Spritzenkörpers (1) nach Schwenkung seiner Längsachse um 90° im zweiten Teilsystem der Glasbearbeitungsmaschine auf einem eine vertikale Achse aufweisenden, schrittgeschalteten Drehtisch (12) durchgeführt wird, dessen Haltefutter (13) um horizontale Achsen drehbar sind.

2. Verfahren nach Anspruch 1, **dadurch gekennzeichnet, dass** im ersten Teilsystem der Maschine folgende Arbeitschritte durchlaufen werden:
Mehrmaliges, abwechselnd erfolgendes Wärmen und Verformen des am unteren Ende offenen, rotierenden Glasrohres mit Hilfe von Gasbrennern und Formwerkzeugen;
Einstellung der Spritzenkörperlänge in einer Absenkstation, in der das Glasrohr mit dem am unteren Ende fertig geformten Spritzenkörpers mit Hilfe einer vertikal verfahrbaren Auffallplatte nach dem Öffnen des Haltefutters auf die zu fertigende Spritzenlänge abgesenkt wird;
Abtrennung des auf Länge gezogenen Spritzenkörpers durch ein Thermoschockverfahren, bei dem ein angeritztes, rotierendes Glasrohr nach dem Erwärmen der Trennstelle mit Hilfe eines feinen, vernebelten Wasserstrahls durch Spannungsrisse abgesprengt wird;
Aufnahme des abgetrennten halbfertigen Spritzenkörpers und seine Überführung aus einer Vertikal- in eine Horizontallage.

3. Verfahren nach Anspruch 1 oder 2, **dadurch gekennzeichnet, dass** im zweiten Teilsystem der Maschine folgende Arbeitsschritte durchlaufen werden:
Einsetzen des Spritzenkörpers in ein horizontales Haltefutter;
Erwärmung des an der Seite offenen Endes des rotierenden Spritzenkörpers mit Hilfe von Gasbrennern;
Verformung des rotierenden Spritzenkörpers an der offenen Seite mit Hilfe eines Doms zur Erzeugung eines tellerförmigen Fingerflansches;
Erwärmung des rotierenden Fingerflansches mit Hilfe von Gasbrennern;
Nachformung des rotierenden Fingerflansches mit Hilfe einer Formstation bestehend aus zwei rotativ gelagerten Formrollen und einem mittig stehenden Formdorn;
Abschneiden zweier gegenüberliegender Seiten des nicht rotierenden Fingerflansches mit Hilfe einer Schervorrichtung;
Nachformung des rotierenden Fingerflansches mit Hilfe mindestens einer Formstation bestehend aus zwei rotativ gelagerten Formrollen und einem mittig stehenden Formdorn;
Entnahme des fertigen Spritzenkörpers mit Hilfe einer Entnahmeeinrichtung.

4. Glasbearbeitungsmaschine zur Durchführung des Verfahrens nach einem der Ansprüche 1 bis 3, **dadurch gekennzeichnet, dass** sie mindestens zwei durch eine Transfereinheit (70) miteinander verknüpfte Drehtische (5, 12) aufweist, von denen der eine (5) mit um eine vertikale Achse rotierenden Haltefuttern (8) und der andere (12) mit um horizontale Achsen rotierenden Haltefuttern (13) ausgestattet ist.

5. Glasbearbeitungsmaschine nach Anspruch 4, **dadurch gekennzeichnet, dass** die Transfereinheit (70) einen ersten an einem Vertikalschlitten (73) befestigten Greifer (74) zum Erfassen des an der Schnittstelle zwischen dem ersten Drehtisch (5) und dem zweiten Drehtisch (12) durch ein Haltefutter (8f) des ersten Drehtisches (5) freigegebenen, halbfertigen Spritzenkörpers (1) aufweist, durch den dieser Spritzenkörper (1) in einen zweiten Greifer (76) überführbar ist, der an einem auf einem Horizontalschlitten (77) gelagerten, schwenkbaren Träger (75) befestigt ist und zum Beschicken des sich an der Schnittstelle befindlichen Haltefutters (13a) des zweiten Drehtisches (12) dient.

6. Glasbearbeitungsmaschine nach Anspruch 4 oder 5, **dadurch gekennzeichnet, dass** der dem ersten Drehtisch (5) nachgeschaltete zweite Drehtisch (12) Haltefutter (13) aufweist, die stationsabhängig automatisch stillsetzbar sind.
